# EUROPÄISCHE PATENTSCHRIFT

(11) **EP 2 614 565 B1**
(45) Veröffentlichungstag und Bekanntmachung des Hinweises auf die Patenterteilung: **03.08.2016**
(21) Anmeldenummer: 11761276.2
(22) Anmeldetag: 24.08.2011
(51) Int. Cl.: H02G 3/22, H02G 15/013

(54) **KABELDURCHFÜHRUNG**
CABLE BUSHING
TRAVERSÉE DE CÂBLES

(30) Priorität: 11.09.2010 DE 102010045146
(43) Veröffentlichungstag der Anmeldung: 17.07.2013
(73) Patentinhaber: LEONI Bordnetz-Systeme GmbH, 97318 Kizingen (DE)
(72) Erfinder: GRAEF, Karl-Heinz, 97353 Wiesentheid (DE); BARNICKEL, Alexander, 96332 Pressig (DE)
(74) Vertreter: FDST Patentanwälte
(86) Internationale Anmeldenummer: PCT/EP2011/004243
(87) Internationale Veröffentlichungsnummer: WO 2012/031690

(56) Entgegenhaltungen:
- WO-A1-01/59501
- WO-A1-01/81807
- US-A1- 2007 193 766

## Beschreibung

Die Erfindung betrifft eine Kabeldurchführung, insbesondere für ein Kraftfahrzeug zur abgedichteten Führung eines Kabelstrangs mit mehreren elektrischen Leitungen durch eine Wandöffnung mit den Merkmalen des Oberbegriffs des Anspruchs 1.

Eine derartige Kabeldurchführung ist beispielsweise zu entnehmen aus der US 2007/0193766 A1.

Aus der DE 35 44 785 A1 ist ein Abdichtungssystem bekannt, welches sich als Wanddurchführung für Leitungen eignet. Das Abdichtungssystem umfasst einen Aufnahmekörper aus einem nachgiebigen Material, der von zwei Schalensegmenten, die Im angelegen Zustand als Spannrahmen wirken, zusammengedrückt wird, um ein feuchtigkeitsdichtes Anlegen des Aufnahmekörpers an die Leitungen zu erreichen. Der Aufnahmekörper besteht aus einem formstabilen elastischen Block aus Gummi oder gummiähnlichem Material. In diesem Block sind Durchgangsbohrungen für die Leitungen vorgesehen. Von den Durchgangsbohrungen führen Schlitze zur Außenseite des Aufnahmekörpers. Dadurch lässt sich der Aufnahmekörper für das Einlegen der Leitungen etwas aufklappen. Beim Anlegen der Schalensegmente, die den Aufnahmekörper umschließen, wird der Aufnahmekörper zusammengedrückt, so dass alle Spalte im Aufnahmekörper geschlossen werden.

Aus der DE 697 14 720 T2 ist eine Dichtung für einen Öffnungsabschluss zu entnehmen, bei dem ein Dichtungselement zwischen Druckplatten angeordnet ist und die Leitungen einzelweise durch die Druckplatten und dem Dichtungselement geführt sind.

Aus der WO 01/81807 A1 ist eine Vorrichtung zur abgedichteten Durchführung von beispielsweise Rohren durch Mauerdurchbrüchen zu entnehmen. Zwischen dem Rohr und eine in den Mauerdurchbruch eingebrachten Mauerhülse wird ein ringförmiges Dichtelement eingebracht, welches in Axialrichtung von Schrauben durchsetzt ist, welche das Dichtelement in Axialrichtung verspannen, so dass dieses in Radialrichtung aufgespreizt wird.

Aus der US 2007/0193766 A1 ist ein Rohrstutzen zu entnehmen, durch den mehrere Kabel durch ein Dichtelement geführt werden können. Das Dichtelement ist wiederum über ein in axialer Richtung wirkendes Druck- oder Spannelement in Axialrichtung komprimierbar, so dass ein elastisches Ausweichen des Dichtmaterials erfolgt.

Aus der WO 01/59501 A1 ist schließlich ein Dichteinsatz für Kabeldurchführungen zu entnehmen, welcher mehrere Durchführöffnungen für einzelne Stränge aufweist, wobei diese jeweils zum Außenumfang des Dichtelements über einen in raidaler Richtung verlaufender Einführschlitz nach außen hin offen sind, so dass die einzelnen Stränge von der Umfangsseite her in die Durchführungen eingesetzt werden können.

Der Erfindung liegt die Aufgabe zugrunde, eine im Hinblick auf die Längswasserdichtigkeit verbesserte Kabeldurchführung anzugeben.

Die Aufgabe wird erfindungsgemäß gelöst durch eine Kabeldurchführung, insbesondere für ein Kraftfahrzeug, zur abgedichteten Führung eines Kabelstrangs mit mehreren elektrischen Leitungen durch eine Wandöffnung, umfassend ein formfestes Gehäuse zum Einsetzen in die Wandöffnung, das ein als vorgefertigte Einheit ausgebildetes Dichtelement aus einem elastischen Dichtmaterial umschließt, wobei im Dichtelement Aufnahmen zur einzelweisen Führung der elektrlschön Leitungen in einer Axialrichtung vorgesehen sind. Weiterhin Ist ein Druckelement vorgesehen, welches eine Druckkraft auf das Dichtelement ausübt derart, dass das Dichtmaterial sich in radialer Richtung senkrecht zur Axialrichtung aufweltet, also radial nach außen verdrängt ist. Dadurch ist erreicht, dass die elektrischen Leitungen einzelweise dicht vom Dichtmaterial umschlossen sind und vorzugsweise gleichzeitig das Dichtelement radial gegen das Gehäuse angepresst ist.

Zusätzlich weist das Druckelement Stifte auf, die in Bohrungen im Dichtelement hineinragen und zwar derart, dass über die Stifte eine radiale Druckkraft auf das Dichtmaterial des Dichtelements im Bereich der Bohrungen ausgeübt wird, die das radiale Anpressen des Dichtelements gegen das Gehäuse zumindest unterstützt.

Hierzu weisen die Stifte ein Übermaß zu den Bohrungen, also einen größeren Durchmesser auf, wodurch auch eine Abdichtung der Stifte im Dichtelement gewährleistet Ist.

Durch die Stifte des Druckelements erfolgt z.B. die axiale Fixierung des Dichtelements, insbesondere können die beiden Teile des Dichtelements über die Stifte miteinander verbunden werden.

Neben der Funktion des radialen Aufweitens dienen die Stifte, auch zur genauen (Dreh-) Positionierung der Druckelemente bezüglich des Dichtelements und haben Vorteile bei der Montage.

Gemäß einer ersten, bevorzugten Variante erstrecken sich die Stifte in Axialrichtung. Insbesondere sind dabei zwei Druckplatten als Druckelemente vorgesehen, die zwischen sich das Dichtelement einschließen. Bevorzugt weist Jede Druckplatte Stifte auf, die in das Dichtelement hineinragen, Insbesondere fluchten die Stifte der gegenüberliegenden Druckplatten miteinander. Die Stifte erstrecken sich jeweils nur ein Teilstück in das Dichtelement hinein. Bevorzugt sind die Druckplatten dabei nicht miteinander verbunden.

Gemäß einer zweiten Variante erstrecken sich die Stifte in einer senkrecht zur Axialrichtung stehenden Ebene erstrecken. Zweckdienlicherweise sind dabei die Druckelemente als Bügel ausgebildet, die sich um den Umfang des Druckelements erstrecken, so dass mehrere Stifte von mehreren Seiten in das Druckelement eingeführt sind. Diese Ausgestaltung kann alternativ oder in Ergänzung zu den Druckplatten, die stirnseitig eine Druckkraft auf das Druckelement ausüben eingesetzt werden.

Gemäß einer bevorzugten Ausführungsvariante weist das Gehäuse eine Umfangsfläche auf, die mit Öffnungen für die Stifte versehen ist und die Bügel liegen außen am Gehäuse an der Umfangsfläche an. Dadurch, dass die Bügel, d.h. das Druckelement außerhalb des Gehäuses angeordnet ist, ist die radiale Aufweitung des Dichtelements nur durch das Gehäuse begrenzt, so dass eine gute Abdichtung zwischen dem Dichtelement und dem Gehäuse entsteht. Dadurch entfällt auch die Notwendigkeit die Bügel gegenüber dem Gehäuse abzudichten.

Über das Gehäuse wird die Kabeldurchführung üblicherweise dicht in die Wandöffnung montiert. Das Gehäuse weist dabei einen Befestigungsflansch mit einer Anlagefläche zur Anlage an einem Rand der Öffnung sowie eine umlaufende Dichtung, die insbesondere ein O-Ring ist, zur Abdichtung des Gehäuses zur Wandöffnung hin auf. Das formfeste Gehäuse, üblicherweise als formstabiles Kunststoff-Spritzgussteil ausgebildet, dient dabei nicht nur zur Abdichtung der Kabeldurchführung gegenüber der Wandöffnung. Vielmehr wird es auch zum Abstützen des Druckelementes benutzt, wobei das Gehäuse insbesondere ein Widerlager bildet, so dass das Druckelement seine Druckkraft auf das vorgefertigte, insbesondere zylinderförmige Dichtelement aus dem nachgiebigen Dichtmaterial ausüben kann. Die Druckkraft bewirkt hierbei ein Aufweiten des Dichtmaterials des Dichtelemerits, so dass das Dichtelement in Radialrichtung gegen das Gehäuse angepresst wird und zudem das Dichtmaterial die einzelnen elektrischen Leitunggen dicht umschließt. Die Abdichtung des Kabelstrangs basiert dabei auf einer definierten Expansion des elastischen Dichtmaterials durch welche nicht nur eine sichere Abdichtung um die elektrischen Leitungen geschaffen ist, sondern auch im Kontaktbereich zwischen dem Dichtelement und dem Gehäuse kein Wasser durchdringen kann. Bei einer derart aufgebauten Kabeldurchführung reicht es somit, lediglich die Kabeldurchführung in die Wandöffnung einzustecken und sie über den O-Ring gegenüber der Wandöffnung abzudichten.

Bei der Kabeldurchführung handelt es sich daher um eine vorgefertigte Baueinheit, die zusammen mit den einliegenden Kabeln insbesondere einen vorkonfektionierten Kabelsatz bilden, bei dem beispielsweise endseitig an den Leitungen bereits Stecker angeschlagen sind. Bei den einzelnen Bauteilen der Kabeldurchführung, wie Dichtelement, Druckelement, Gehäuse, handelt es sich ebenfalls um vorgefertigte, separate Einzel-Baueinheiten, die insbesondere lösbar miteinander verbunden sind, so dass eine Reparatur und ein Austausch defekter Komponenten oder Leitungen ermöglicht ist. Ein Vergießen einer Dichtmasse in das Gehäuse zur Ausbildung des Dichtelements ist daher nicht vorgesehen. Das Dichtmaterial des Dichtelements ist insgesamt bevorzugt gummielastisch und beispielsweise ein (Moos-)Gummi, ein (thermoplastisches) Elastomer oder ein (Silikon-) Kautschuk.

Um die elektrischen Leitungen besonders einfach einzelweise in die Aufnahmen einsetzen zu können, weist das Dichtelement bevorzugt mindestens eine Trennstelle auf, die sich über die gesamte Länge des Dichtelements erstreckt, derart dass die einzelnen elektrischen Leitungen über die Trennstelle senkrecht zur Axialrichtung also seitlich und zumindest annähemd in radialer Richtung in das Dichtelement einbringbar sind. Bei dieser Ausführung des Dichtelements ist ein Durchstecken der einzelnen elektrischen Leitungen nicht erforderlich, sondern die Leitungen werden über die mindestens eine Trennstelle, die sich zwischen den beiden Stirnseiten des Dichtelements erstreckt, in die Aufnahmen eingelegt. Das Einbringen der elektrischen Leitungen erfolgt somit senkrecht, d.h. seitlich zur Axialrichtung und nicht in die Axialrichtung wie beim Durchstecken der elektrischen Leitungen. Bei einem möglichen Defekt von Bauteilen der Kabeldurchführung kann diese zu Reparaturzwecken zerstörungsfrei demontiert werden.

Nach einer bevorzugten Ausgestaltung weist das Druckelement zwei gegenüberliegende Teile auf, die insbesondere formschlüssig miteinander verbunden sind. Durch die zwei gegenüberliegenden Teile des Druckelements wird gewährleistet, dass die Druckkraft von zumindest zwei entgegengesetzten Richtungen auf das Dichtelement ausgeübt wird. Das Druckelement wirkt z.B. auf beiden Stirnseiten des Dichtelements. Alternativ erstrecken sich beide Teile des Druckelements um den Umfang des Dichtelements. Die Teile des Druckelements sind bevorzugt formschlüssig und lösbar miteinander verbunden, z.B. über eine Rast- oder Schnappverbindung. Im Falle einer Demontage der Kabeldurchführung kann das Druckelement somit schnell auseinandergebaut werden.

Im Hinblick auf eine besonders einfache Einbringung der elektrischen Leitungen in die Aufnahmen sind mehrere Trennstellen vorgesehen, die als Schlitze um den Umfang des Dichtelements ausgebildet sind und von dort bis zu den Aufnahmen reichen. Die Schlitze sind vorzugsweise lediglich als Einschnitte ohne eine offene Schlitzbreite ausgebildet, so dass die Randseiten der Schlitze direkt aneinander anliegen. Durch die Schlitze werden die elektrischen Leitungen von der Außenseite des Dichtelements in die Aufnahmen hineingedrückt. Eine gute Abdichtung der Schlitze ist dabei erreicht, indem die Schlitze vorzugsweise bezüglich einer Radialen schräg nach außen verlaufen und insbesondere einen gekrümmten Verlauf aufweisen. Hierdurch werden die Schlitze zuverlässig dicht geschlossen, sobald über das Druckelement eine resultierende radiale Kraft ausgeübt wird, die zur radialen Aufweitung des Dichtmaterials führt.

Nach einer bevorzugten Variante umfasst das Druckelement zwei Druckplatten, die stimseitig am Dichtelement anliegen. Die Druckplatten üben stirnseitig eine großflächige Druckkraft auf das Druckelement aus, wodurch sich das Druckelement in Radialrichtung aufweitet. Durch eine geeignete Ausbildung der Kontaktflächen des Dichtelements und der Druckplatten wird die Erzeugung einer radialen Kraftkomponente unterstützt. Bevorzugt weist wahlweise oder in Kombination das Druckelement oder das Dichtelement zumindest einen Druckflächenabschnitt auf, der schräg zur Axialrichtung orientiert ist derart, dass hierdurch beim axialen Zusammenpressen des Dichtelements eine radial nach außen wirkende Kraftkomponente entsteht. Konstruktiv ist dies erreicht, indem z.B. das Druckelement konvex ausgebildet ist. Ergänzend dazu sind die Stirnseiten des Dichtelements insbesondere konkav ausgeführt.

Eine erhöhte Flächenpressung auf dem Gehäuse durch das radial expandierte Dichtelement wird erreicht, indem vorzugsweise das Dichtelement umfangsseitig eine Profilierung aufweist, durch welche die Mantelfläche des Dichtelements reduziert ist. Die Profilierung ist z.B. nach Art einer oder mehrerer um den Umfang des Dichtelements verlaufender Nuten ausgebildet.

Damit die Druckplatten möglichst großflächig auf das Druckelement wirken, ist ihr Durchmesser etwa so groß wie der des Dichtelements. Um die durch das Dichtelement geführten elektrischen Leitungen auch durch die Druckplatten führen zu können, haben die Druckplatten nach einer bevorzugten Ausgestaltung umfangsseitige Ausnehmungen für die elektrischen Leitungen, wobei die Ausnehmungen insbesondere zum hintergreifenden und verliersicheren Aufnehmen der Leitungen ausgebildet und beispielsweise L-förmig sind. Nach dem Einlegen der elektrischen Leitungen in die L-förmigen Ausnehmungen werden die Druckplatten geringfügig insbesondere gegensinnig verdreht, wodurch ein Herausfallen der elektrischen Leitungen verhindert wird.

Damit zumindest eine der Druckplatten sich axial auf das Gehäuse abstützen kann, weist das Gehäuse vorteilhafterweise einen Anschlag auf, dessen Durchmesser kleiner ist als der Durchmesser der Druckplatten. Für die gegenüberliegende Druckplatte ist ebenfalls ein axiales Widerlager erforderlich, insbesondere wenn die beiden Druckplatten nicht miteinander verbunden sind, das z.B. nach dem Montieren der Druckplatten in dem Gehäuse am Gehäuse angebracht wird. Hierfür ist vorzugsweise ein ringförmiges Verriegelungselement vorgesehen, welches mit dem Gehäuse insbesondere formschlüssig und lösbar verbindbar ist und dadurch eine axiale Kraft auf das Druckelemerit bzw. eine der Druckplatten ausübt. Die Verbindung erfolgt hierbei insbesondere nach Art eines Bajonettverschlusses. Das Verriegelungselement bildet somit einen zweiten axialen Anschlag für eine der Druckplatten. Das Verriegelungselement wird in einer vördefinierten Position mit dem Gehäuse verbunden, wodurch die Relativposition zwischen dem Gehäuse und dem Verriegelungselement in Axialrichtung verriegelt ist, so dass eine vordefinierte Anpresskraft in Axialrichtung auf die anliegende Druckplatte wirkt. Das Verriegelungselement ist z.B. ein Verriegelungsring mit einem verengten Hals, dessen Durchmesser kleiner ist als der Durchmesser der Druckplatten. Besonders vorteilhaft beim Einsatz des Verriegelungselements ist, dass keine weiteren Bauteile, wie z.B. Schrauben, Beilagescheiben oder Gewindeeinsätze benötigt sind. Die Verbindung zwischen dem Verriegelungselement und dem Gehäuse erfolgt insbesondere über einen Bajonettverschluss. Alternativ sind z.B. am Ver riegelungsverschluss Schnapphaken vorgesehen, die am Gehäuse einrasten. Die Verpressung des Dichtelements über die Dichtplatten ist dabei durch die konstruktive Länge der Schnapphaken vorgegeben.

Alternativ zu den Schlitzen ist die Trennstelle gemäß einer weiteren bevorzugten Variante durch mindestens eine Trennebene gebildet und das Dichtelement besteht aus zwei oder mehreren aneinander anliegenden Dichtkörpern, wobei zumindest in einem Dichtkörper Kanäle vorgesehen sind, die im zusammengebauten Zustand des Dichtelements die Aufnahmen für die elektrischen Leitungen bilden. Die nebeneinander angeordneten Kanäle erstrecken sich jeweils in Axialrichtung und liegen in der Trennebene. Diese wird daher von den Kanälen aufgespannt. In der Trennebene werden somit mehrere elektrische Leitungen nebeneinander geführt. Die Kanäle sind radial offen, so dass die elektrischen Leitungen ohne großen Aufwand in die Kanäle eingelegt werden. Erst beim Zusammenfügen der zwei oder mehreren Dichtkörper werden die Kanäle geschlossen, wodurch die Aufnahmen für die elektrischen Leitungen gebildet werden.

Die Montage der elektrischen Leitungen ist vereinfacht, indem die Kanäle vorteilhafterweise zur verliersicheren Aufnahme der Leitungen ausgebildet sind und hierzu im Querschnitt betrachtet jeweils einen Hinterschnitt aufweisen, so dass die einzelnen Leitungen teilweise vom Dichtmaterial umgriffen sind. Die bereits in den Kanälen eingelegten Leitungen werden somit verliersicher in ihrer Position gehalten solange weitere Leitungen in die für sie vorgesehen Kanäle eingedrückt werden.

Eine besonders effiziente Abdichtung der elektrischen Leitungen in den Aufnahmen entlang ihrer Länge ist erreicht, wenn die Kanäle bevorzugt in einem Teilabschnitt eine Verengung aufweisen. An der Stelle der Verengung ist eine besonders hohe Flächenpressung zur Abdichtung der Leitungen erzielt. Die Verengung kann auch als ein sich quer zur Axialrichtung erstreckender Steg ausgebildet sein, der die Kanäle vollständig blockiert. Beim Einlegen der Leitungen in die Kanäle wird das elastische Dichtmaterial im Bereich des Steges weggedrückt.

Zum Verstärken der Abdichtung zwischen dem Dichtelement und dem Gehäuse ist um den Umfang des Dichtelements, insbesondere im Bereich der Bohrungen, mindestens eine wulstartige Verdickung ausgebildet, die im zusammengebauten Zustand der Kabeldurchführung zusammengepresst ist. Dies ist vorzugsweise auch bei der Variante mit den stirnseitig angeordneten Druckplatten vorgesehen.

Ausführungsbeispiele der Erfindung werden anhand einer Zeichnung näher erläutert. Hierin zeigen:
- Fig. 1: in einer Explosionsdarstellung eine erste Ausführungsvariante einer Kabeldurchführung,
- Fig. 2: einen Axialschnitt durch die zusammengebaute Kabeldurchführung gemäß Fig. 1,
- Fig. 3: ein Dichtelement in perspektivischer Darstellung mit umfangsseitig eingebrachten Nuten
- Fig. 4A-C: eine perspektivische Schnittdarstellung einer Druckplatte in verschiedenen Varianten (Fig. 4A,4B) bzw. eines Dichtelements (Fig. 4C) mit schrägen, insbesondere gekrümmten stirnseitigen Druckflächenabschnitten
- Fig.5: eine perspektivische Darstellung einer Druckplatte mit Stift und Rastaufnahme,
- Fig. 6: in einer Explosionsdarstellung eine zweite Ausführungsvariante einer Kabeldurchführung,
- Fig. 7: perspektivisch die Kabeldurchführung gemäß Fig. 6 im zusammengebauten Zustand,
- Fig. 8: einen Axialschnitt durch die Kabeldurchführung gemäß Fig. 7, und
- Fig. 9: schematisch einen Querschnitt durch ein Dichtelement einer Kabeldurchführung gemäß Fig. 6 bis Fig. 8.

Gleiche Bezugszeichen haben in den verschiedenen Figuren die gleiche Bedeutung.

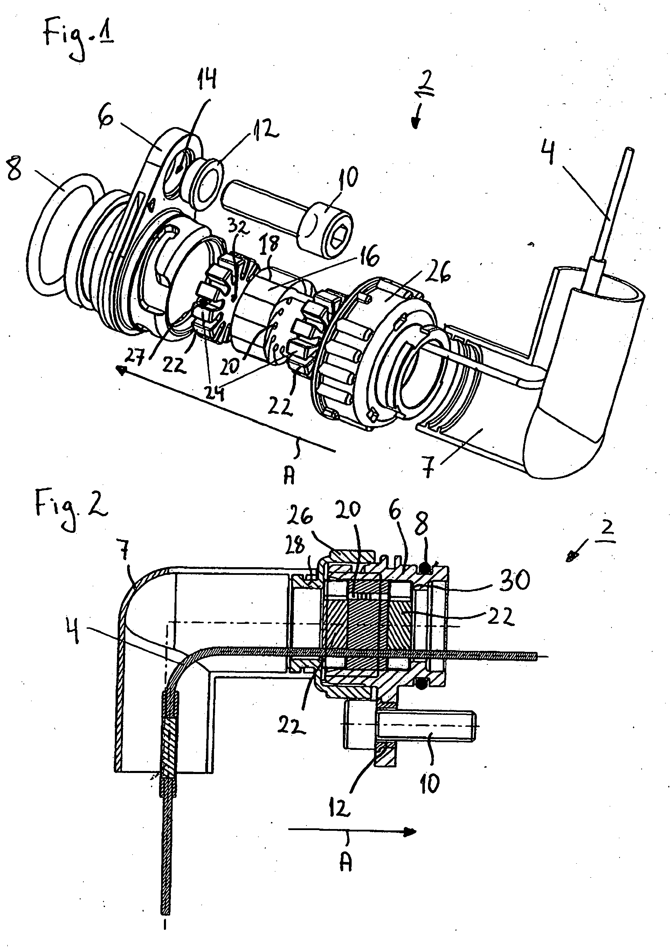

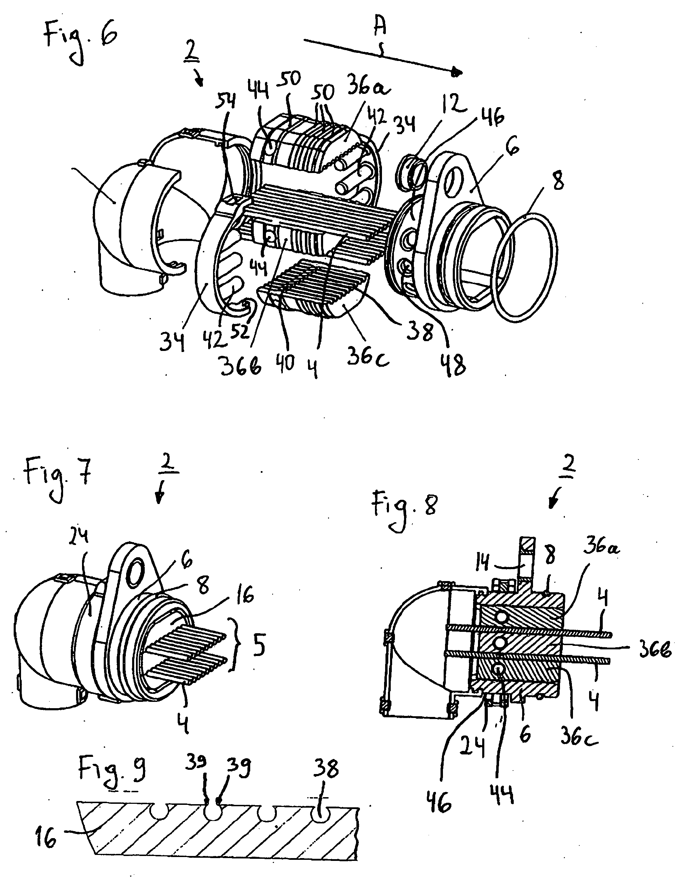

Eine erste Ausführungsvariante einer Kabeldurchführung 2 zur abgedichteten Führung eines Kabelstrangs durch eine Wandöffnung ist in Figuren 1 und 2 gezeigt. Der Kabelstrang umfasst mehrere elektrische Leitungen 4 eines Kabelstrangs 5 (siehe Fig. 7), von denen aus Gründen der Übersichtlichkeit in Fig. 1 und 2 lediglich eine gezeigt ist, die mit dem Bezugszeichen 4 gekennzeichnet ist. Zum Schutz der elektrischen Kabelleitung 4 außerhalb der Kabeldurchführung 2 ist eine Schutzkappe 7 vorgesehen.

Die Kabeldurchführung 2 umfasst ein formfestes Gehäuse 6 zum Einführen in die Wandöffnung. Zur Abdichtung des Gehäuses 6 gegenüber der Wandöffnung ist ein O-Ring 8 vorgesehen. Das Gehäuse 6 weist einen flanschartigen Anschlag zur Anlage an einem Rand der Wandöffnung auf. Die Befestigung der Kabeidurchführung 2 an der Wand erfolgt mittels einer Schraube 10, welche mit Hilfe einer Buchse 12 durch eine Öse 14 am Gehäuse 6 geführt ist.

Die Kabeldurchführung 2 umfasst außerdem ein Dichtelements 16, das in diesem Ausführungsbeispiel ein einteiliger, massiver zylindrischer Körper aus einem elastischen Dichtmaterial wie beispielsweise Gummi ist. Um den Umfang des Dichtelements 16 sind mehrere in Axialrichtung A verlaufende Schlitze 18 ausgebildet, die jeweils bis zu einer zylinderförmigen Aufnahme 20 zur einzelweisen Führung der elektrischen Leitungen 4 in Axialrichtung A reichen. Die Aufnahmen 20 bilden entsprechend einen konzentrischen Kreis nicht weit von der Mantelfläche des Dichtelements 16. Im Querschnitt betrachtet weisen die Schlitze 18 einen gekrümmten Verlauf auf. Die elektrischen Leitungen 4 werden hierbei über die Schlitze 18 senkrecht zur Axialrichtung A bis zu den Aufnahmen 20 hineingedrückt..

An beiden Stirnseiten des Dichtelements 16 liegt jeweils eine Druckplatte 22 an, wobei die Druckplatten 22 Teil eines zweiteiligen Druckelements 24 sind, mit dessen Hilfe eine Druckkraft auf das Dichtelement 16 ausgeübt wird. Im gezeigten Ausführungsbeispiel wird die Druckkraft auf das Druckelement 24 durch ein Ver riegelungselement 26 erzeugt, welches über einen Bajonettverschluss mit dem Gehäuse 6 fest verbunden ist. Das Verriegelungselement 26 sowie die Druckplatten 22 sind feste und formstabile Bauteile.

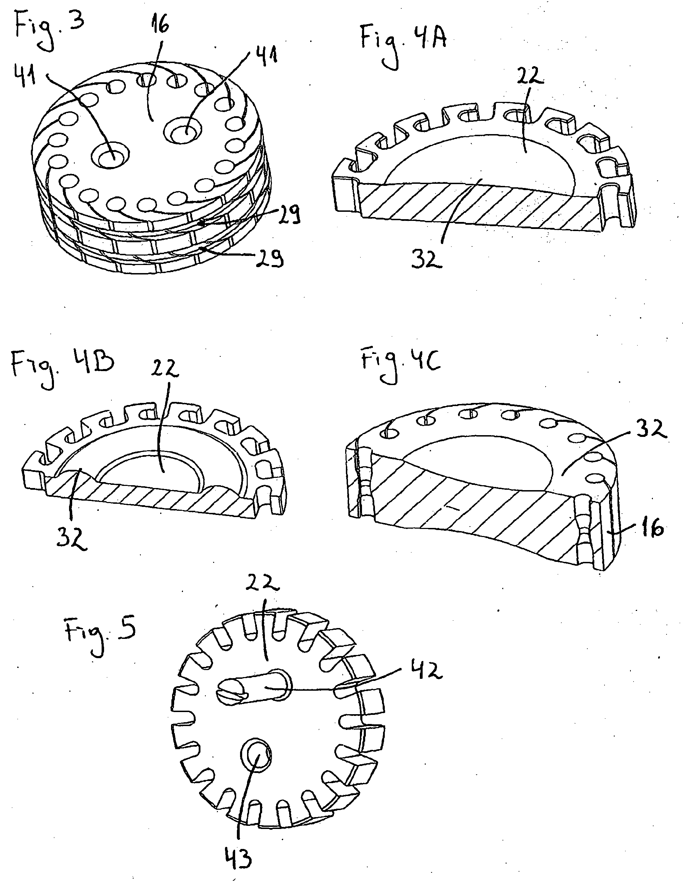

Die Druckplatten 22 haben um ihren Umfang mehrere Ausnehmungen 27, durch welche die elektrischen Leitungen geführt sind. Die Anzahl der Ausnehmungen entspricht dabei der Anzahl der Aufnahmen 20 im Dichtelement 16. Die Ausnehmungen 27 sind im Querschnitt betrachtet bevorzugt L-förmig ausgebildet, so dass ein Herausfallen der elektrischen Leitungen 4 bei der Montage verhindert wird (vgl. Fig. 4A, 4B). Hierzu werden die Druckplatten 22 gegeneinander verdreht.

Die Druckplatten 22 weisen bevorzugt Stifte 42 auf, wie dies beispielsweise in Fig. 5 dargestellt ist. Insbesondere weist jede Druckplatte 22 eine Mehrzahl von Stif ten, beispielsweise zwei, drei oder mehr Stifte auf. Diese dringen bevorzugt beidseitig in jeweils eine gemeinsame Bohrung 41 (vgl. Fig. 3) des Dichtelements 16 ein.

Die Stifte 42 weisen einen größeren Durchmesser als die zugeordnete Bohrung 41 auf, so dass das Dichtmaterial in radialer Richtung verdrängt und dadurch eine verbesserte Längswasserdichtigkeit erzielt wird.

Zur Vergrößerung der Flächenpressung des Dichtelements 18 zum Gehäuse 6 kann das Dichtelement 16 um seinen Umfang eine Profilierung nach Art von einer oder mehreren Nuten 29 aufweisen (vgl. Fig. 3).

Gemäß Fig. 1 weisen die Stirnseiten des Dichtelements 16 einen ebenen Verlauf in einer Querebene auf, die quer zur Axialrichtung A steht. Auch die Seiten der Druckplatten 22, die an dem Dichtelement 16 anliegen, sind plan ausgebildet. Möglich ist jedoch, eine radiale Kraftkomponente der Druckkraft auf das Dichtelement 16 zu erzeugen, indem ein Druckflächenabschnitt 32 der Druckplatten 22 oder die Stirnseite des Dichtelements 16 schräg zur Axialrichtung A geneigt, beispielsweise konvex ausgebildet sind. Beispiele hierfür sind in den Fig. 4A,4B,4C dargestellt. Wenn der Druckflächenabschnitt 32 der Druckplatten 22 konvex ist, können ergänzend die Stirnseiten des Dichtelements 16 konkav sein. Der konvexe Druckflächenabschnitt 32 ist z.B. nach Art einer mittigen Erhebung der Stirnseite ausgebildet, er kann jedoch auch ringartig auf der Stirnfläche verlaufen.

Das Verriegelungselement 26 weist einen verengten Hals 28 auf, dessen Durchmesser kleiner ist als der der Druckplatten 22. Der Hals 28 bildet einen axialen Anschlag für eine der Druckplatten 22. Am Gehäuse 6 ist ein weiterer Anschlag 30 für die zweite Druckplatte 22 ausgebildet, so dass die Position der zweiten Druckplatte 22 im Gehäuse 6 festgelegt ist. Der Durchmesser des Anschlags 30 ist kleiner als ein Durchmesser der Druckplatten 22.

Durch die Verbindung des Verriegelungselements 26 mit dem Gehäuse 6 wird eine axiale Kraft erzeugt, da das Verriegelungselement 26 auf der anliegenden Druckplatte 22 drückt. Diese Druckkraft wird über die Druckplatten 22 in das Dichtelement 16 eingeleitet. Durch diese Druckkraft weitet sich das Dichtmaterial des Dichtelements 16 radial auf, so dass das Dichtelement gegen das Gehäuse 6 angepresst wird und zudem die einzelnen elektrischen Leitungen, die durch die Aufnahmen 20 im Dichtelement 16 geführt sind, vom Dichtmaterial dicht umschlossen werden. Die Größe der Druckkraft wird dabei durch die Position des ringförmigen Verriegelungselements 26 gegenüber dem Gehäuse 6 definiert.

Alternativ zum Bajonettverschluss kann das Verriegelungselement 26 über Schnapphaken, die am Gehäuse 6 einrasten, mit dem Gehäuse 6 verbunden sein. Die Druckkraft hängt dabei insbesondere von der Länge des Schnäpphakens ab.

Die Druckplatten 22 weisen jeweils - wie in Fig. 5 dargestellt - vorzugsweise sich axial erstreckende Stifte 42 auf, die durch axiale Bohrungen 41 im Dichtelement 16 (siehe Fig. 3) durchgeführt sind. Beispielweise weist nur eine der Druckplatten 22 axiale Stifte auf, die etwa so lang sind wie das Dichtelement 16 in Axialrichtung A breit ist, und die andere Druckplatte weist Aufnahmen, z.B. Rastaufnahmen 43 für das Ende der Stifte. Diese Ausgestaltung dient neben der Komprimierung des Dichtelements 16 auch als Montagehilfe Bei der in Fig. 5 dargestellten Variante weist jede der Druckplatten 22 einen Stift 42 und eine Rastaufnahme 43 auf.

Die zweite Ausführungsvariante der Kabeldurchführung 2 gemäß Figuren 6 bis 8 unterscheidet sich von der ersten dadurch, dass das Druckelement 24, aus zwei Bügeln 34 besteht, die um das Dichtelement 16 angeordnet sind. Zudem ist das Dichtelement 16 in zwei parallele Trennebenen geteilt, so dass das Dichtelement 16 aus drei Dichtkörpern 36a, 36b und 36c besteht. In jedem der Dichtkör per 36a, 36b, 36c sind Kanäle 38 ausgebildet, die in Axialrichtung A über die gesamte Länge der Dichtkörper 36a, 36b, 36c verlaufen. Die Kanäle 38 sind radial offen, so dass in diese die elektrischen Leitungen 4 eingelegt werden können. Die Kanäle 38 an einem mittleren Dichtkörper 36b weisen zudem Hinterschnitte 39 auf, die in Fig. 9 dargestellt sind. Durch die Hinterschnitte 39 sind die elektrischen Leitungen 4, wenn sie in den Kanälen 38 eingelegt sind, vom Dichtmaterial hinter griffen. Somit wird verhindert, dass bei der Montage der Kabeldurchführung 2 die an den mittleren Dichtkörper 36b entlang geführten Leitungen 4 und insbesondere die Leitungen 4 an der unteren Seite des mittleren Dichtkörpers 36b herausfallen.

Die zwei äußeren Dichtkörper 36a,36c weisen in einem Teilabschnitt eine Verengung 40 der Kanäle 38 auf, durch welche die elektrischen Leitungen 4 im zusammengebauten Zustand axial fixiert sind.

Beim Auflegen der zwei äußeren Dichtkörper 36a, 36c auf den mittleren Dichtkörper 36b sind die Leitungen 4 in den Aufnahmen 20, die durch die Kanäle 38 am mittleren Dichtkörper 36b und durch die korrespondierenden Kanäle 38 an den äußeren Dichtkörpern 36a, 36c im Inneren des Dichtelements 16 ausgebildet sind, einzeln vom Dichtmaterial umschlossen. Da der Dichtkörper 16 zwei Teilebenen aufweist, sind die Leitungen 4 des Kabelstrangs 5 in zwei parallel zueinander verlaufende Ebenen aufgeteilt. Bei einem Dichtelement 16, das sich aus mehr als drei Dichtkörpern 36a, 36b, 36c zusammensetzt, ist die Anzahl der Ebenen von Leitungen 4 entsprechend größer.

Zur Aufweitung des Dichtmaterials des Dichtelements 16 werden im zweiten Ausführungsbeispiel Stifte 42 verwendet, die von den Bügeln 34 nach innen ragen und sich senkrecht zur Axialrichtung A erstrecken. Für die Stifte 42 sind Bohrungen 44 in den Dichtkörpern 36a, 36b, 36c vorgesehen, wobei die Stifte 42 ein Übermaß gegenüber den Bohrungen 44 aufweisen, so dass die Stifte 42 eine Druckkraft auf das Dichtelement 16 ausüben, wenn sie in den Bohrungen 44 eingeführt sind. Durch diese Druckkraft kann sich das Dichtelement 16 sowohl axial als auch radial aufweiten, so dass es gegen das Gehäuse 6 angepresst wird.

Die zwei Bügel 34 des Druckelements 24 werden nicht direkt auf das Dichtelement 16 angebracht, sondern sie liegen an einer Umfangsfläche 46 des Gehäuses 6 an. Die Umfangsfläche 46 des Gehäuses 6 ist hierfür mit Öffnungen 48 für die Stifte 42 versehen. Die Bügel 34 werden zur Ausbildung des Druckelements 24 lösbar miteinander verbunden. Die Verbindung ist insbesondere formschlüssig und erfolgt über eine Rastnase 52, die in eine Rastaufnahme 54 des jeweils anderen Bügels 34 einrastet.

Im Hinblick auf eine besonders gute Abdichtung in Radialrichtung zwischen dem Dichtelement 16 und dem Gehäuse 6 weist das Dichtelement 16 um seinen Umfang mehrere wulstartige Verdickungen 50 auf. Eine dieser Verdickungen 50 befindet sich im Bereich der Bohrungen 44. Wenn das Dichtelement 16 vom Gehäuse 6 umschlossen ist und die Stifte 42 in die Bohrungen 44 eingeführt werden, liegt das Dichtelement 16 im Bereich der Verdickungen 50 besonders dicht am Gehäuse 6 an.

Beide beschriebenen Ausführungsvarianten einer Kabeldurchführung 2 zeichnen sich dadurch aus, dass eine besonders gute Abdichtung der Kabeldurchführung 2 erreicht wird, indem das elastische Dichtelement 16 radial aufgeweitet wird und dabei gegen das Gehäuse 6 gedrückt wird. Der Unterschied zwischen den beiden Ausführungsvarianten liegt im Wesentlichen darin, dass bei der ersten das Druckelement 24, durch welches die Druckkraft in das Dichtelement 16 eingeleitet wird, axial auf die Stirnseiten des Dichtelements 16 wirkt und bei der zweiten Ausführungsvariante die Druckkraft über die Stifte 42 ins Innere des Dichtelements 16 eingeleitet wird. Bedingt durch die unterschiedliche Anordnung des Druckelements 24 bezüglich des Dichtelements 16 ist auch das Dichtelement 16 in den beiden Ausführungsvarianten unterschiedlich ausgestaltet. In der ersten Ausführungsvariante weist es um seinen Umfang axial verlaufende Trennstellen auf, die als Schlitze 18 ausgebildet sind, um die Aufnahmen 20 für die Leitungen 4 zu erreichen. In der zweiten Ausführungsvariante sind die Trennstellen durch zwei Trennebenen gebildet, so dass das Dichtelement 16 dreiteilig ausgeführt ist.

Bei beiden Ausführungsvarianten lassen sich die Leitungen 4 jedoch auf einfache Weise senkrecht zur Axialrichtung A in die Aufnahmen 20 einlegen. Zudem können die Kabelführungen 2 im Störfall schnell und einfach demontiert werden.

**Bezugszeichenliste**

| | | | |
|---|---|---|---|
| | | 30 | Anschlag |
| 2 | Kabeldurchführung | 32 | Druckflächenabschnitt |
| 4 | elektrische Leitung | 34 | Bügel |
| 5 | Kabelstrang | 36a,b,c | Dichtkörper |
| 6 | Gehäuse | 38 | Kanal |
| 7 | Schutzkappe | 39 | Hinterschnitt |
| 8 | O-Ring | 40 | Verengung |
| 10 | Schraube | 41 | Bohrung |
| 12 | Buchse | 42 | Stift |
| 14 | Öse | 43 | Rastaufnahme |
| 16 | Dichtelement | 44 | Bohrung |
| 18 | Schlitz | 46 | Umfangsfläche |
| 20 | Aufnahme | 48 | Öffnung |
| 22 | Druckplatte | 50 | Verdickung |
| 24 | Druckelement | 52 | Rastnase |
| 26 | Verriegelungselement | 54 | Rastaufnahme |
| 27 | Ausnehmungen | | |
| 28 | Hals | A | Axialrichtung |
| 29 | Nuten | | |

## Patentansprüche

1. Kabeldurchführung (2), insbesondere für ein Kraftfahrzeug, zur abgedlchteten Führung eines Kabelstrangs (5) mit mehreren elektrischen Leitungen (4) durch eine Wandöffnung, umfassend ein formfestes Gehäuse (6) zum Einsetzen in die Wandöffnung, das ein Dichtelement (16) aus einem elastischen Dichtmaterial umschließt, wobei im Dichtelement (16) Aufnahmen (20) zur einzelweisen Führung der elektrischen Leitungen (4) in einer Axialrichtung (A) vorgesehen sind, sowie umfassend ein Druckelement (24), welches eine Druckkraft auf das Dichtelement (16) ausübt, derart dass das Dichtmaterial radial nach außen verdrängt ist, **dadurch gekennzeichnet, dass** das Dichtelement (16) Bohrungen (41,44) und das Druckelement (24) Stifte (42) aufweist, welche in die Bohrungen (41,44) hineingreifen, wobei die Stifte (42) ein Übermaß bezüglich der Bohrungen (41,44) aufweisen und zu einer radiaien Verdrängung des Dichtmaterials des Dichtelements (16) führen.

2. Kabeldurchführung (2) nach Anspruch 1, wobei sich die Bohrungen und die Stifte (42) in Axialrichtung (A) oder senkrecht zur Axialrichtung (A) erstrecken.

3. Kabeldurchführung (2) nach Anspruch 2, **dadurch gekennzeichnet, dass** das Druckelement (24) zwei Bügel (34) umfasst, die das Dichtelements (16) umfangsseitig umschließen,

4. Kabeldurchführung (2) nach Anspruch 3,
wobei das Gehäuse (6) eine Umfangsfläche (46) aufweist, die mit Öffnungen (48) versehen ist und die Bügel (34) an der Umfangsfläche (46) anliegen.

5. Kabeldurchführung (2) nach einem der vorhergehenden Ansprüche, wobei das Dichtelement (16) mindestens eine Trennstelle aufweist, die sich über die gesamte Länge des Dichtelements (16) erstreckt, so dass die einzelnen elektrischen Leitungen (4) über die Trennstelle senkrecht zur Axialrichtung in das Dichtelement (16) einlegbar sind.

6. Kabeldurchführung (2) nach einem der vorhergehenden Ansprüche,
wobei das Druckelement (24) zwei gegenüberliegende Teile (22, 34) aufweist.

7. Kabeldurchführung (2) nach Anspruch 5 und einem der vorhergehenden Ansprüche,
wobei mehrere Trennstellen vorgesehen sind, die als Schlitze (18) ausgebildet sind und von einem Umfang des Dichtelements (16) bis zu den Aufnahmen (20) reichen.

8. Kabeldurchführung (2) nach einem der vorhergehenden Ansprüche,
wobei wahlweise oder in Kombination das Druckelemente (24) oder das Dichtelement (16) einen Druckflächenabschnitt (32) aufweist, der schräg zur Axialrichtung (A) orientiert ist derart, dass hierdurch beim axialen Zusammenpressen des Dichtelements (16) eine radial nach außen wirkende Kraftkomponente entsteht.

9. Kabeldurchführung (2) nach einem der vorhergehenden Ansprüche,
wobei das Dichtelement (16) umfangsseitig eine Profilierung (29) aufweist.

10. Kabeldurchführung (2) nach einem der vorhergehenden
wobei das Druckelement (24) Druckplatten (22) umfasst, die umfangsseitige Ausnehmungen (27) für die elektrischen Leitungen (4) aufweisen, die insbesondere zur hintergreifenden Aufnahme der Leitungen (4) ausgebildet sind, und wobei das Gehäuse (6) einen Anschlag (30) aufweist, dessen Durchmesser kleiner ist als ein Durchmesser der Druckplatten (22).

11. Kabeldurchführung (2) nach einem der vorhergehenden Ansprüche,
wobei ein Verriegelungselement (26) vorgesehen Ist, welches mit dem Gehäuse (6) insbesondere formschlüssig verbindbar ist und dadurch eine axiale Druckkraft auf das Druckelement (24) ausübt und wobei eine Relativposition zwischen dem Gehäuse (6) und dem Verrieglungsring (26) in Axialrichtung (A) festgelegt ist.

12. Kabeldurchführung (2) nach einem der vorhergehenden Ansprüche,
wobei die Trennstelle durch mindestens eine sich in Axialrichtung (A) erstreckende Trennebene gebildet ist und das Dichtelement (16) aus zwei oder mehreren aneinander anliegenden Dichtkörpern (36a, 36b, 36c) besteht, wobei zumindest in einem Dichtkörper (36a, 36b, 36c) Kanäle (38) vorgesehen sind, die Im zusammengebauten Zustand des Dichtelements (16) die Aufnahmen (20) für die elektrischen Leitungen (4) bilden.

13. Kabeldurchführung (2) nach Anspruch 12,
wobei die Kanälen (38) im Querschnitt betrachtet jeweils einen Hinterschnitt (39) aufweisen, so dass die einzelnen Leitungen (4) teilweise vom Dichtmaterial umgriffen sind.

14. Kabeldurchführung (2) nach Anspruch 12 oder 13.
wobei die Kanäle (38) in einem Teilabschnitt eine Verengung (40) aufweisen.

15. Kabeldurchführung (2) nach einem der vorhergehenden Ansprüche,
wobei um den Umfang des Dichtelements (16), insbesondere im Bereich der Bohrungen (44), mindestens eine wulstartige Verdickung (50) ausgebildet ist.

## Claims

1. Cable bushing (2), in particular for a motor vehicle, for the sealed-off guiding of a cable strand (5) having several electrical lines (4) through a wall opening, comprising a dimensionally stable housing (6) for insertion into the wall opening, said housing enclosing a sealing element (16) made from an elastic sealing material, wherein receivers (20) for the individual guiding of the electrical lines (4) in an axial direction (A) are provided in the sealing element (16), and comprising a pressure element (24) which exerts a compressive force onto the sealing element (16) in such a way that the sealing material is displaced radially outwards, **characterised in that** the sealing element (16) has bore holes (41, 44) and the pressure element (24) has pins (42) which encroach into the bore holes (41, 44), wherein the pins (42) are oversized relative to the bore holes (41, 44) and lead to a radial displacement of the sealing material of the sealing element (16).

2. Cable bushing (2) according to claim 1, wherein the bore holes and the pins (42) extend in the axial direction (A) or perpendicular to the axial direction (A).

3. Cable bushing (2) according to claim 2, **characterised in that** the pressure element (24) comprises two brackets (34) which enclose the sealing element (16) on its periphery.

4. Cable bushing (2) according to claim 3,
wherein the housing (6) has a peripheral surface (46) which is provided with openings (48) and the brackets (34) adjoin the peripheral surface (46).

5. Cable bushing (2) according to one of the preceding claims,
wherein the sealing element (16) has at least one joint which extends over the entire length of the sealing element (16), such that the individual electrical lines (4) are able to be inserted into the sealing element (16) via the joint, perpendicular to the axial direction.

6. Cable bushing (2) according to one of the preceding claims,
wherein the pressure element (24) has two opposite parts (22, 34).

7. Cable bushing (2) according to claim 5 and one of the preceding claims,
wherein several joints are provided which are formed as slots (18) and extend from a periphery of the sealing element (16) to the receivers (20).

8. Cable bushing (2) according to one of the preceding claims,
wherein, optionally or in combination, the pressure element (24) or the sealing element (16) has a pressure surface section (32) which is positioned at an angle relative to the axial direction (A) in such a way that a force component acting radially outwards hereby arises during the axial compression of the sealing element (16).

9. Cable bushing (2) according to one of the preceding claims,
wherein the sealing element (16) has profiling (29) on its periphery.

10. Cable bushing (2) according to one of the preceding claims,
wherein the pressure element (24) comprises pressure plates (22) which have peripheral recesses (27) for the electrical lines (4), which are in particular designed for the rearward-engaging receiving of the lines (4), and wherein the housing (6) has a stop (30) whose diameter is smaller than a diameter of the pressure plates (22).

11. Cable bushing (2) according to one of the preceding claims,
wherein a locking element (26) is provided which is in particular able to be connected positively to the housing (6) and thereby exerts an axial compressive force onto the pressure element (24), and wherein a relative position between the housing (6) and the locking ring (26) is set in the axial direction (A).

12. Cable bushing (2) according to one of the preceding claims,
wherein the joint is formed by at least one parting plane extending in the axial direction (A) and the sealing element (16) consists of two or more sealing bodies (36a, 36b, 36c) adjoining one another, wherein channels (38) are provided in at least one sealing body (36a, 36b, 36c), said channels forming, in the assembled state of the sealing element (16), the receivers (20) for the electrical lines (4).

13. Cable bushing (2) according to claim 12,
wherein the channels (38), when viewed in cross-section, each have an undercut (39), such that the individual lines (4) are partially encompassed by the sealing material.

14. Cable bushing (2) according to claim 12 or 13,
wherein the channels (38) have a narrowing (40) in a partial section.

15. Cable bushing (2) according to one of the preceding claims,
wherein at least one bulge-like thickening (50) is formed around the periphery of the sealing element (16), in particular in the region of the bore holes (44).

## Revendications

1. Traversée de câbles (2), notamment destiné à un véhicule automobile, pour le guidage étanche d'un faisceau de câbles (5) avec plusieurs conducteurs électriques (4) à travers une ouverture de paroi, comprenant un boitier (6) de forme rigide destiné à être inséré dans l'ouverture de paroi et entourant un élément d'étanchéité (16) en un matériau d'étanchéité élastique, des logements d'accueil (20) étant prévus dans une direction axiale (A) dans l'élément d'étanchéité (16), pour le guidage individuel des conducteurs électriques (4), l'ensemble comprenant également un élément de compression (24), qui exerce une force de compression sur l'élément d'étanchéité (16) de manière telle que le matériau d'étanchéité soit refoulé ou repoussé radialement vers l'extérieur,
**caractérisée en ce que** l'élément d'étanchéité (16) présente des alésages (41, 44), et l'élément de compression (24) présente des broches (42) qui s'engagent dans les alésages (41, 44), les broches (42) présentant une surcote dimensionnelle par rapport aux alésages (41, 44) et conduisant à un refoulement radial du matériau d'étanchéité de l'élément d'étanchéité (16).

2. Traversée de câbles (2) selon la revendication 1, dans laquelle les alésages et les broches (2) s'étendent dans la direction axiale (A) ou perpendiculairement à la direction axiale (A).

3. Traversée de câbles (2) selon la revendication 2, **caractérisée en ce que** l'élément de compression (24) comprend deux étriers (34), qui entourent l'élément d'étanchéité (16) sur sa périphérie.

4. Traversée de câbles (2) selon la revendication 3, dans laquelle le boitier (6) présente une surface périphérique (46), qui est pourvue d'ouvertures (48), et les étriers (34) s'appuient contre la surface périphérique (46).

5. Traversée de câbles (2) selon l'une des revendications précédentes, dans laquelle l'élément d'étanchéité (16) présente au moins une zone de séparation ou de sectionnement, qui s'étend sur toute la longueur de l'élément d'étanchéité (16), de sorte que les conducteurs électriques (4) individuels peuvent être déposés dans l'élément d'étanchéité (16) par l'intermédiaire de la zone de séparation ou de sectionnement, perpendiculairement à la direction axiale.

6. Traversée de câbles (2) selon l'une des revendications précédentes, dans laquelle l'élément de compression (24) comprend deux parties (22, 34) mutuellement opposées.

7. Traversée de câbles (2) selon la revendication 5 et l'une des revendications précédentes, dans laquelle sont prévues plusieurs zones de séparation ou de sectionnement, qui sont réalisées sous forme de fentes (18), et s'étendent de la périphérie de l'élément d'étanchéité (16) jusqu'aux logements d'accueil (20).

8. Traversée de câbles (2) selon l'une des revendications précédentes, dans laquelle sélectivement ou en combinaison, l'élément de compression (24) ou l'élément d'étanchéité (16) présente un tronçon de surface de compression (32), qui est orienté de manière inclinée par rapport à la direction axiale (A) de façon telle que lors de l'écrasement axial ou de la compression axiale de l'élément d'étanchéité (16), il apparaisse une composante de force agissant radialement vers l'extérieur.

9. Traversée de câbles (2) selon l'une des revendications précédentes, dans laquelle l'élément d'étanchéité (16) présente un profilage (29) sur le côté périphérique.

10. Traversée de câbles (2) selon l'une des revendications précédentes, dans laquelle l'élément de compression (24) comprend des plaques de compression (22), qui présentent, sur la périphérie, des évidements (27) pour les conducteurs électriques (4), notamment conçus pour accueillir en contre-dépouille les conducteurs (4), et dans laquelle le boitier (6) comporte une butée (30) dont le diamètre est plus petit qu'un diamètre des plaques de compression (22).

11. Traversée de câbles (2) selon l'une des revendications précédentes, dans laquelle il est prévu un élément de verrouillage (26), qui peut être relié, notamment par complémentarité de formes, avec le boitier (6), en exerçant ainsi une force de compression axiale sur l'élément de compression (24), et dans laquelle une position relative entre le boitier (6) et l'anneau de verrouillage (26) est fixée dans la direction axiale (A).

12. Traversée de câbles (2) selon l'une des revendications précédentes, dans laquelle la zone de séparation ou de sectionnement est formée par au moins un plan de séparation ou de sectionnement s'étendant dans la direction axiale (A), et l'élément d'étanchéité (16) est constitué de deux ou plusieurs corps d'étanchéité (36a, 36b, 36c) adjacents, des canaux (38) étant prévus dans au moins un des corps d'étanchéité (36a, 36b, 36c) et formant, dans l'état assemblé de l'élément d'étanchéité (16), les logements d'accueil (20) pour les conducteurs électriques (4).

13. Traversée de câbles (2) selon la revendication 12, dans laquelle les canaux (38), vus en section transversale, présentent chacun une contre-dépouille (39), de sorte que les conducteurs individuels (4) sont enserrés partiellement par le matériau d'étanchéité.

14. Traversée de câbles (2) selon la revendication 12 ou la revendication 13, dans laquelle les canaux (38) présentent, sur un tronçon partiel, un rétrécissement (40).

15. Traversée de câbles (2) selon l'une des revendications précédentes, dans laquelle autour de la périphérie de l'élément d'étanchéité (16), notamment dans la zone des alésages (44), est formé au moins un renflement (50) en forme de bourrelet.
